# EUROPEAN PATENT APPLICATION

(11) **EP 4 235 989 A1**
(43) Date of publication of application: **30.08.2023**
(21) Application number: 22158331.3
(22) Date of filing: 23.02.2022
(51) Int. Cl.: H02B 13/025, H02B 13/065, H02B 13/075

(54) **GAS-INSULATED SWITCHGEAR**

(71) Applicant: ABB SCHWEIZ AG, 5400 Baden (CH)
(72) Inventor: WEST, John, 3744 Skien (NO); AMUNDSEN, Sigurd, 3746 SKIEN (NO)
(74) Representative: Kransell & Wennborg KB

(57) **Abstract**

The present disclosure relates to a gas-insulated switchgear (1) comprising a gas insulated compartment (2) housing at least one conductor (11) and switching equipment (5) arranged for breaking a current in said conductor. The switchgear also comprises a cable compartment (3) housing at least one power cable (12) electrically connected to the at least one conductor in the gas insulated compartment. The switchgear also comprises an arc suppressor (6) in the gas insulated compartment, arranged to short circuit the conductor when activated, wherein the arc suppressor is arranged to be automatically activated in case of an arc discharge within the gas insulated compartment. The switchgear also comprises a fault detector (7) in the cable compartment, electrically connected to the arc suppressor and arranged to activate the arc suppressor by means of an electrical signal (14) when detecting a fault in the cable compartment.

## Description

### TECHNICAL FIELD

The present disclosure relates to a gas-insulated switchgear comprising an arc suppressor.

### BACKGROUND

A switchgear may be a circuit breaker or a general purpose switch of larger scale which makes it possible to cut off the current to a certain cable in large power networks and in industries. A switchgear comprises a circuit breaker and/or load break switch and/or switch-fuse disconnector and/or disconnector, or a general purpose switch. The whole switchgear is usually grounded as a security measure.

Switchgears are used in electric power systems to control, protect and isolate electrical equipment. In distribution nets, switchgears are located on both the high voltage and the low voltage side of power transformers. The switchgear on the low voltage side of the transformers may be located in a building, with medium-voltage circuit breakers for distribution by several individual circuits to end users.

One of the basic functions of switchgears is protection, which includes interruption of short-circuits and overload fault currents while maintaining service to other unaffected distribution circuits. An arc eliminator is often provided in a switchgear to decrease or, preferably, prevent any damage caused by faults. An arc eliminator may short out an electric arc within a switchgear and in doing so also prompt a breaker, located up-stream, to clear the fault by cutting the power to the switchgear.

DE 3606770 discloses a switchgear with three breakers, one for each line in a three-phase circuit, arranged in a gas-filled encapsulation. In case of the occurrence of an arc within the encapsulation, the pressure will increase and activate earthing switches, which in response connect all the lines to earth.

DE 3131417 discloses a similar switchgear, with a mechanical pressure sensor that activates an earthing switch or a short-circuiting device.

### SUMMARY

It is an objective of the present invention to improve handling of a fault in a cable compartment, outside of a gas-tight gas insulated compartment of a switchgear.

According to an aspect of the present invention, there is provided a gas-insulated switchgear comprising a gas insulated compartment housing at least one conductor and switching equipment arranged for breaking a current in said conductor. The switchgear also comprises a cable compartment housing at least one power cable electrically connected to the at least one conductor in the gas insulated compartment. The switchgear also comprises an arc suppressor in the gas insulated compartment, arranged to short circuit the conductor when activated, wherein the arc suppressor is arranged to be automatically activated in case of an arc discharge within the gas insulated compartment. The switchgear also comprises a fault detector in the cable compartment, electrically connected to the arc suppressor and arranged to activate the arc suppressor by means of an electrical signal when detecting a fault in the cable compartment.

According to another aspect of the present invention, there is provided a method of activating an arc suppressor in a gas-insulated switchgear. The method comprises, by a fault detector, detecting a fault in a cable compartment of the switchgear. The method also comprises, in response to the detecting of the fault, sending an electrical signal to the arc suppressor in a gas insulated compartment of the switchgear. The method also comprises, in response to the sent electrical signal, activating the arc suppressor to short circuit at least one conductor in the gas insulated compartment.

By activating the arc suppressor in the gas insulated compartment by means of an electrical signal from a fault detector in the cable compartment, the fault in the cable compartment can be cleared faster, e.g. before pressure build-up in the cable compartment becomes critical or requires venting, especially for high-voltage (HV) applications.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic circuit diagram of a switchgear, according to some embodiments of the present invention.
Fig 2 is a schematic block diagram of an arc suppressor in accordance with some embodiments of the present invention.
Fig 3 is a schematic flow chart of an embodiment of a method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

In accordance with the present invention, the arc suppressor can be activated, not only in response to an arc discharge (herein also called arc or arcing) within the gas-tight gas insulated compartment, but also in case a fault, e.g. an arc being detected in the cable compartment. By using electric signalling between the fault detector in the cable compartment and the arc suppressor in the gas insulated compartment, instead of e.g. mechanical connection, the arc suppressor can be activated faster, earlier during the fault, e.g. before the pressure in the cable compartment has build-up to a level where venting or other action has to be taken. Also, a faster and/or more sensitive fault detector may be used.

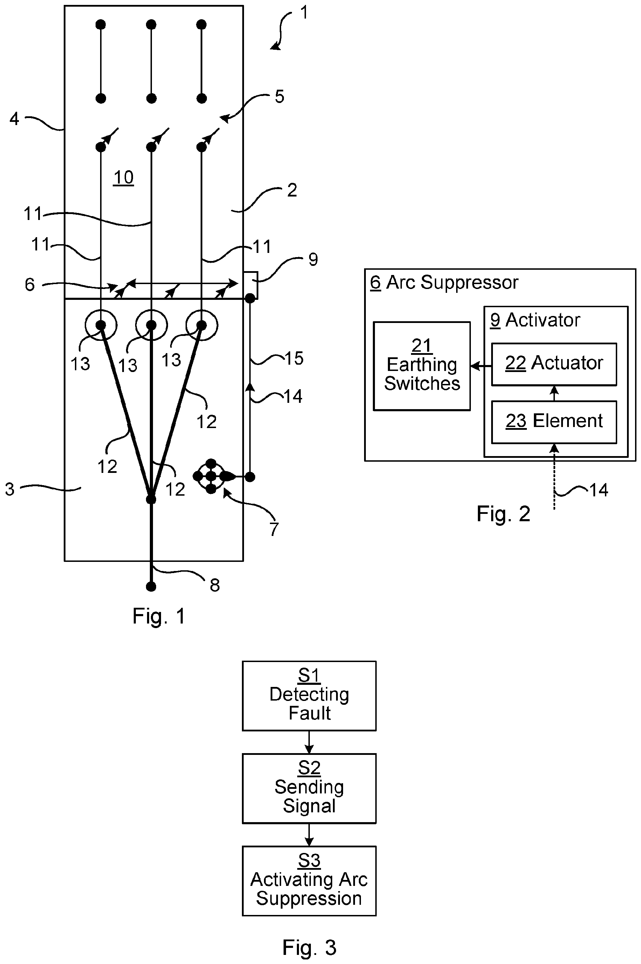

Figure 1 illustrates a gas-insulated switchgear 1 comprising a gas insulated compartment 2 and a cable compartment 3 outside of the gas insulated compartment.

The gas insulated compartment 2 is formed by a gas-tight enclosure 4 filled with an electrically insulating gas 10, typically at an absolute pressure within the range of 1-4 bar, preferably 1-2 bar, more preferably 1.2-1.4 bar. The gas insulated compartment houses electrical conductor(s) 11 and switching equipment 5 arranged for breaking a current in said conductor(s) 11. Typically, the switching equipment 5 comprises at least one, e.g. one per phase or conductor 11, circuit breaker, load break switch, disconnect switch and/or fuse. In the embodiment of figure 1, there are three conductors 11, one for each line of a three-phase system. Nominally, the current in the conductors 11 which the switching equipment 5 is configured to break may be an Alternating Current (AC) HV current within the range of 1-52 kV, preferably 10-42 kV, e.g. 12 kV, 24 kV or 36/40.5 kV. Typically, the current is a three-phase current. Thus, in some embodiments of the present invention, the switchgear 1 is rated for a three-phase high-voltage Alternating Current (AC) within the range of 1-52 kV, preferably 10-42 kV, e.g. 12 kV, 24 kV, 36 kV or 40.5 kV.

The electrically insulating gas 10 may be or comprise SF₆ or any other suitable gas, or mixture thereof. In some embodiments, the electrically insulating gas is a non-SF₆ gas, e.g. having a global warming potential lower than that of SF₆. In that case, the electrically insulating gas may be air, dry air, or a gas mixture. For example, the electrically insulating gas may be a gas mixture including an organofluorine compound selected from the group consisting of: a fluorether, an oxirane, a fluoramine, a fluoroketone, a fluoroolefin, a fluoronitrile, and mixtures and/or decomposition products thereof. In other embodiments, the electrically insulating gas 10 may comprise at least one background gas component selected from the group consisting of CO₂, O₂, N2, H2, air, N20, in a mixture with a hydrocarbon or an organofluorine compound. In particular, the electrically insulating gas may comprise as a hydrocarbon at least CH₄, a perfluorinated and/or partially hydrogenated organofluorine compound, or a mixture thereof. The organofluorine compound is preferably selected from the group consisting of: a fluorocarbon, a fluoroether, a fluoroamine, a fluoronitrile, and a fluoroketone; and preferably is a fluoroketone and/or a fluoroether, more preferably a perfluoroketone and/or a hydro fluoroether, more preferably a perfluoroketone having from 4 to 12 carbon atoms and even more preferably a perfluoroketone having 4, 5 or 6 carbon atoms. In particular, the perfluoroketone is or comprises at least one of: C₂F₅ C(O)CF(CF₃)₂ or dodecafiuoro-2-methylpentan-₃-one, and CF₃C(O)CF(CF₃)₂ or decafluoro-₃-methylbutan-2-one. The electrically insulating gas 10 may comprise the fluoroketone mixed with air or an air component such as N2, O₂, and/or CO₂.

The gas insulated compartment 2 also comprises an arc suppressor 6 housed within the enclosure 4. The arc suppressor is arranged to automatically short circuit the conductor(s) 11 in case of arcing within the enclosure 4, e.g. short circuiting the conductors 11 to each other and/or to ground. Any conventional arc suppressor may be used, e.g. an arc suppressor which is activated by a pressure increase within the enclosure 4 e.g. by mechanical deformation of a diaphragm which releases an actuator of the arc suppressor. Thus, in some embodiments of the present invention, the arc suppressor 6 comprises a loaded spring 22 as actuator, e.g. a coil compression spring, whereby the arc suppressor is activatable by releasing said spring. The actuator 22 may be comprised in an activator 9.

The cable compartment 3 houses power cable(s) 12 which are electrically connected to respective conductors 11 in the gas insulated compartment 2. Typically, each of the power cables 12 is connected, via a connector 13, to a respective one of the conductors 11. In a three-phase system as in figure 1, each of the three cables 12 are connected to a respective one of the three conductors 11. In contrast to the equipement compartment 2, the cable compartment is typically open to the ambient air though it may have walls to protect its content and to protect its surroundings from its content (e.g. HV). An incoming cable feeder 8 enters the cable compartment 3 and provides the power cables 12 therein.

In accordance with the present invention, the cable compartment also houses a fault detector 7 arranged to activate the arc suppressor 6 in the gas insulated compartment 2 by means of an electrical signal 14, e.g. sent via a galvanic connection 15 and/or wirelessly to the arc suppressor 6 from the fault detector 7, when the fault detector 7 has detected a fault in the cable compartment 3. The fault detector 7 may be arranged to detect the fault, e.g. arcing, in the cable compartment in any way, e.g. by detecting light, temperature change, pressure change or sound. Thus, in some embodiments of the present invention, the fault detector 7 may comprise an optical, pressure, heat or sound sensor, preferably an optical sensor which may be fastest in detecting an arc. If a heat/temperature sensor or a pressure sensor is used, the fault detector 7 may react to change in temperature or pressure or to how fast the temperature or pressure changes. For instance, the fault detector 7 may activate the arc suppressor 6 if it detects, by means of its pressure sensor, a pressure change of more than 0.1 bar per millisecond (ms). By means of the fault detector 7 and its ability to electronically activate the arc suppressor 6, the fault in the cable compartment 3 may be cleared by the arc suppressor 6 before significant or dangerous pressure build-up in the cable compartment. The cable compartment 3 may thus not need to be designed to withstand high pressure or to vent high pressure resulting from a fault, e.g. arcing, in the cable compartment.

By means of the electrical signalling 14 from the fault detector 7 to the arc suppressor 6, e.g. via a connector and/or activator 9 of the arc suppressor, the arc suppressor can be activated relatively fast after detection of a fault by the fault detector 7, e.g. within the range 1-10 ms from detection. Since the arc suppressor 6 is configured to short circuit the conductors 11 very fast, the time period from detection to short circuiting of the conductors 11 may also be within the range of 1-10 ms.

Figure 2 illustrates an arc suppressor 6, comprising earthing switches 21 configured to short circuit the conductors 11 when the arc suppressor is activated, either in response to a fault within the gas insulated compartment 2 or in response to a fault detected by the fault detector 7 in the cable compartment 3. To close the earthing switches 21, the arc suppressor 6 comprises an activator 9 comprising an actuator 22, e.g. in the form of a loaded spring (compression, extension or torsion spring) as mentioned above, for mechanically driving the earthing switches 21 to a closed position when the actuator is released, short circuiting the conductors 11.

The activator 9 is configured to release the actuator 22 in response to the electrical signal 14 from the fault detector 7. In some embodiments of the present invention, this is achieved by means of a movable element 23 which may be automatically moved in response to the electrical signal 14, to physically impact the actuator 22, or a release mechanism thereof, to release the actuator. For instance, the movable element 23 may be moved electromagnetically e.g. by being or by means of an electrically conductive coil. Thus, in some embodiments of the present invention, the arc suppressor 6 comprises a loaded spring 22 as actuator, e.g. a coil compression spring, whereby the arc suppressor is activatable by releasing said spring. In some embodiments, the arc suppressor 6 comprises a movable element 23 arranged to be automatically moved to release the spring 22 of the arc suppressor in response to the electrical signal 14 from the fault detector 7.

Figure 3 illustrates some embodiments of the method of the present invention. The method is for of activating an arc suppressor 6 in a gas-insulated switchgear 1. The method comprises, by a fault detector 7, detecting S1 a fault in a cable compartment 3 of the switchgear. In response to the detecting S1 of the fault, the method comprises sending S2 an electrical signal 14 to the arc suppressor 6 in a gas-tight gas insulated compartment 2 of the switchgear. In response to the sent S2 electrical signal 14, received by the arc suppressor 6 e.g. by an activator 9 thereof, the method comprises activating S3 the arc suppressor 6 to short circuit at least one conductor 11 in the gas insulated compartment 2. The method may be performed in an embodiment of the switchgear 1 disclosed herein, e.g. by means of respective processing circuitry of the fault detector 7 and the activator 9 and the communication of the signal 14 there between.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A gas-insulated switchgear (1) comprising:
a gas insulated compartment (2), filled with an electrically insulating gas (10) and housing at least one conductor (11) and switching equipment (5) arranged for breaking a current in said conductor;
a cable compartment (3), outside of the gas insulated compartment (2), housing at least one power cable (12) electrically connected to the at least one conductor (11) in the gas insulated compartment;
an arc suppressor (6) in the gas insulated compartment (2), arranged to short circuit the conductor (11) when activated, wherein the arc suppressor is arranged to be automatically activated in case of an arc discharge within the gas insulated compartment (3); and
a fault detector (7) in the cable compartment (3), electrically connected to the arc suppressor (6) and arranged to activate the arc suppressor by means of an electrical signal (14) when detecting a fault in the cable compartment.

2. The switchgear of claim 1, wherein the arc suppressor (6) comprises a loaded spring (22) as actuator, e.g. a coil compression spring, whereby the arc suppressor is activatable by releasing said spring.

3. The switchgear of claim 2, wherein the arc suppressor (6) comprises a movable element (23) arranged to be automatically moved to release the spring (22) of the arc suppressor in response to the electrical signal (14) from the fault detector (7).

4. The switchgear of any preceding claim, wherein the fault detector (7) is arranged to detect arcing in the cable compartment (3), e.g. by means of an optical, pressure, heat or sound sensor, preferably an optical sensor.

5. The switchgear of any preceding claim, wherein the switchgear (1) is rated for a three-phase high-voltage Alternating Current, AC, within the range of 1-52 kV, preferably 10-42 kV, e.g. 12 kV, 24 kV, 36 kV or 40.5 kV.

6. The switchgear of any preceding claim, wherein the switching equipment (5) comprises at least one circuit breaker, load break switch, disconnector switch and/or fuse.

7. A method of activating an arc suppressor (6) in a gas-insulated switchgear (1), the method comprising:
by a fault detector (7), detecting (S1) a fault in a cable compartment (3) of the switchgear;
in response to the detecting (S1) of the fault, sending (S2) an electrical signal (14) to the arc suppressor (6) in a gas insulated compartment (2) of the switchgear;
in response to the sent (S2) electrical signal (14), activating (S3) the arc suppressor (6) to short circuit at least one conductor (11) in the gas insulated compartment (2).

8. The method of claim 7, wherein the activating (S3) of the arc suppressor (6) comprises, responsive to the electrical signal (14), moving an element (23) to release a loaded spring (22) in the arc suppressor (6).

9. The method of claim 8, wherein the element (23) is moved by electromagnetic force.

10. The method of any claim 7-9, wherein the arc suppressor (6) is activated before a pressure in the cable compartment (3) is increased to above 1.8 bar abs.
